# EUROPEAN PATENT APPLICATION

(11) **EP 1 515 057 A1**
(43) Date of publication of application: **16.03.2005**
(21) Application number: 04255488.1
(22) Date of filing: 10.09.2004
(51) Int. Cl.: F16C 33/10

(54) **Sliding radial bearing arrangement**

(30) Priority: 13.09.2003 GB 0321545
(71) Applicant: Waukesha Bearings Limited, Polmadie, Glasgow G42 0PT (GB)
(72) Inventor: New, Nigel Harry, Harrow Middlesex HA3 7LJ (GB)
(74) Representative: Harrison Goddard Foote

(57) **Abstract**

A sliding radial Bearing Arrangement (110, Fig. 4 (b))of the immersion-lubricated, profiled clearance type, particularly used with a vertical longitudinal rotation axis orientation, has a stationary bearing surface 117' of the lobed type surrounding a shaft 111 of circular cross-section such that there exists angularly a succession of sections 119₁, ... 119₄ defined by circles centred displaced from the longitudinal axis and by which the clearance 118 is varied as a succession of regions of maximum and minimum clearance 118_{MAX} 118_{MIN}. In at least one region of clearance greater than the minimum a duct of limited angular extent runs longitudinally and is twisted about the longitudinal axis such that its angular position varies between opposite ends of the bearing. The duct may be provided by gutter regions 118_{MAX} between the sections or by channels 150 cut into the surface, each varying in angular position along its length that takes it from one section to an adjacent one by way of the region of maximum clearance.

## Description

This invention relates to radial bearing arrangements for supporting rotating shafts and in particular relates to sliding bearing arrangements lubricated hydrodynamically by shaft rotation and immersion in a bath of lubricant.

Radial bearing arrangements are employed in many types of machines such as pumps and motors where there is the probability of varying levels of loading bearing applied transversely to the rotating shaft journal such that within the inevitable lubricant-filled clearance between the rotating shaft and the surrounding stationary bearing surface there is room for the shaft to rotate eccentrically in conditions of light loading, when the longitudinal rotation axis of the shaft itself describes rotation along a path through a locus of positions displaced from the desired rotation axis position.

Shafts mounted for rotation about a horizontal axis are to some extent continuously loaded transversely by gravity but this is not the case with shafts mounted for rotation about a vertical axis, for example as used in pumps or drills down bore holes, making them more susceptible to such eccentric rotation. Notwithstanding the orientation of the rotation axis and locus of axis movement, it is common to effect sliding bearing lubrication by submerging the stationary bearing surface and rotating journal in a bath of lubricant and creating a hydrodynamic bearing by relative rotation between the shaft journal and sliding surface, drawing the liquid lubricant into the radial clearance gap between them by viscous drag. It is further known to provide for improved stability and stiffness by varying the clearance between shaft journal surface by defining a so-called profiled bore wherein one of the stationary or rotating surfaces has in the direction of relative motion a plurality of inclined or ramped profiles describing a plurality of successive sections in each of which the radial clearance between shaft journal and bearing decreases periodically into a wedge-like gap into which the lubricant is forced by the viscous drag of rotation so as to present an array of regions of locally increased lubricant pressure that provides improved stability and stiffness.

Such profiled clearance bearing may take the form of a cylindrical bush disposed within a housing surrounding and facing a shaft space and having an angularly substantially continuous bearing surface departing from circular cross section by said profiles formed in adjacent sections, or may take the form of an array of discrete pads mounted in fixed or tilting relationship with the bearing housing. There may be a relatively small number of sections of greater radius of curvature wherein the variations in clearance are spread over greater angular distances, often known as lobed bearings.

Alternatively, the cylindrical journal surface of the shaft may be formed with such an angular array of longitudinally extending ridges that define lobed sections that cooperate with a stationary bush surface of circular cross section to define a plurality of wedge-like clearances for the lubricant.

In each case the profile varies radially with angular position about the longitudinal and/or rotation axis but is uniform in a direction parallel to said axis along the bearing.

Examples of profiled bore bearing arrangements are to be found in FR-A-2651845, FR-A-2616861, US-3680932, US-3804472, US-5700547 and US-6099271.

The last of these (US-6099271) relates to a vertical down-hole bearing arrangement.

In such down-hole bearing arrangements in drilling and/or pumping apparatus, then notwithstanding immersion of the bearing arrangement within a lubricant bath that ensures its presence in the bearing clearances, such bearing arrangements are forced to operate in conditions of high ambient temperature where the materials concerned are at their limits of effectiveness, that is, both the lubricant and bearing materials, and are liable to wear at a rate in excess of what might be anticipates for a lubricant-immersed arrangement so well provided with an excess of lubricant.

Within sliding bearing arrangements one component, usually the shaft journal, is formed of a hard wearing material and the other, usually the stationary bush or pads, as a replaceable lining typically of metal alloys which have suitable tribological properties, but relatively low melting point temperatures; thus in addition to preventing rubbing contact between the components an important function of the liquid lubricant is the removal and dissipation of heat from the regions of greatest loading. In some bearing arrangements where ambient temperatures are higher than desirable, usually in respect of thrust bearings where large loads are anticipated, it is known to use a lubricatable polymer material having inter alia a higher melting point than the traditional metal alloys, such as a PEEK based polymer.

Thus the behaviour of the liquid lubricant is crucial in successful operation.

In respect of such fully immersed radial bearing arrangements it is found that notwithstanding the fact that the shaft rotation effects circulation of the liquid in the clearance between components by virtue of viscous drag the lubricant is not circulated thoroughly within the bath as a whole; the circulation is essentially confined to the rotation direction and the liquid within the clearance remains within the clearance, that is, the lubricant bath as a whole is relatively stagnant. Whereas in theory the increased lubricant pressure at the regions of minimum clearance should cause some of the lubricant to be displaced into the lubricant bath and liquid to be drawn in at the regions of maximum clearance to replace it, this does not happen with any efficacy in bearings of significant length as such transfer dependant upon pressure difference tends to be confined only to the end regions. Thus in addition to the already high ambient temperatures, the lubricant within the clearance is subjected to temperature increase due to the work it performs, causing its viscosity to fall and resulting in both its load bearing capacity as a supporting film to fall and the ability of the shaft to circulate it by viscous drag, thereby accelerating its failure as a hydrodynamic film and increasing the possibility of rubbing contact between the shaft journal and stationary bearing surface that initiates accelerated wear and premature failure. Thus even with bearing materials better able to cope with higher operating temperatures, the lubricated bearing arrangement as a whole is compromised as to its operating performance.

One possible approach to mitigating the stagnation effect is to provide lubricant injection to the longitudinally central part of the bearing, possibly by way of the rotating shaft, so that within the immersion lubricant there is a modest pressure gradient between the injection point and the ends of the bearing that is intended to effect circulation of lubricant longitudinally and throughout the bath as well as angularly with the rotation, but without disturbing the hydrodynamic effects resulting from shaft rotation. However, it is believed that even such provision of lubricant at a slightly elevated pressure doers little to prevent the lubricant from becoming effectively trapped within the angular rotation in the clearance between stationary bearing and journal, so that of such approach can at best be said to promote the liquid lubricant bath from a state of stagnation to near stagnation.

Whilst such a vertically orientated down-hole journal bearing is of particular interest to the applicant, it is exemplary only of a hydrodynamic profiled clearance sliding radial bearing which operates submerged in a bath of lubricant and relies mainly upon rotation of the shaft within the stationary journal to effect circulation of the lubricant.

It is an object of the present invention to provide an immersion-lubricated, profiled clearance hydrodynamic sliding radial bearing arrangement which mitigates the effects of lubricant liquid stagnation or near stagnation on bearing operation and life.

According to the present invention an immersion-lubricated, profiled clearance, sliding radial bearing arrangement for a shaft, rotatable about a longitudinal axis and having around its periphery a journal surface, comprises a housing having a longitudinally extending bore centred on a longitudinal axis, a shaft space extending along the bore and centred on the longitudinal axis, arranged in operation to contain a said shaft, and a stationary bearing surface extending longitudinally of the housing and at least in part surrounding the shaft space, said stationary surface and journal surface being arranged to define in operation a clearance therebetween for liquid lubricant, one of the stationary bearing surface or journal surface having a cross sectional profile that is substantially circular and the other of said surfaces having a cross sectional profile that is non-circular, being defined in sections arrayed about its longitudinal axis and defined by arcs of circles centred on an axis displaced from the longitudinal axis so as to vary the clearance with respect to the other surface in an angular direction as a succession of regions of maximum and minimum clearance, there being defined between the journal and bearing surface in at least one region of clearance greater than the minimum a duct extending lengthways of the bearing arrangement, each said duct being of limited angular extent about the longitudinal axis and at an angular position that varies between opposite ends of the bearing arrangement.

Each of a plurality of ducts may comprise the regions of maximum clearance between the adjacent sections, the angular positions of the regions of maximum and minimum clearance varying between said opposite ends of the bearing arrangement.

Alternatively, one or more ducts may each comprise a channel formed in the surface of the stationary bearing, extending lengthways and at an angular position that varies from one section to an adjacent one by way of the region of maximum clearance between the sections.

Conveniently, the angular positions of the ducts vary as a function of longitudinal position between opposite ends of the arrangement. The angular positions may vary as a function of longitudinal position at a constant rate, wherein the angle of displacement is linearly related to distance along the axis, or at a variable rate.

Furthermore such angular position variation may be confined to one or more discrete parts of the bearing arrangement rather than its whole length.

When a duct is formed by a discrete channel in the lobed bearing surface the channel may be of uniform depth relative to the bearing surface or may be of a fixed depth relative to the longitudinal axis, that is, such that it varies in depth with respect to the surface as a function of clearance of the stationary surface from the shaft journal.

The angularly arrayed sections may define a lobed surface for disposition and operation facing a surface of circular cross section.

The angularly arrayed sections may be integral with the housing or shaft or may be discrete therefrom and mounted therewith to define the stationary bearing lining or shaft journal surface. The sections may be formed as a unitary tubular body, as a bush within the housing or as a collar on the shaft, or as discrete from each other and assembled together to create such lining or collar. As a lining the sections may be defined by an array of discrete bearing pads mounted with respect to the housing, which pads may be arranged to deflect with respect to the journal surface in operation, as a deforming cantilever or tilting about a pivot. The sections, whether discrete or as a unitary body, may be moulded of a polymer material incorporating therein the longitudinal variation in angular position of the surface variations defining the regions of maximum and minimum clearance.

Embodiments of the invention will now be described by way of example with reference to the accompanying drawings, in which:
Figure 1(a) is a cross sectional view through a four-lobed sliding bearing known in the art in which a removable shaft having a journal surface of circular cross section is disposed within a bush having four lobes defining alternating regions of minimum and maximum radial clearance with respect to the shaft, the bearing being symmetrical and suited to shaft rotation in either direction,
Figure 1(b) is a schematically ghosted perspective view of the bearing arrangement of Figure 1(a) with the shaft displaced from the bush and illustrating the longitudinally extending nature of the lobes and clearance regions defined thereby,
Figure 2 is a cross-sectional view through a second form of four-lobed sliding bearing arrangement known from the art, intended for unidirectional shaft rotation,
Figure 3 is a cross sectional view of a third form of four-lobed sliding bearing arrangement known from the art intended for uni-directional shaft rotation and analogous to Figure 2 except that the stationary bearing comprises a plain bush of circular cross section and lobes are formed on the journal of the shaft,
Figures 4(a) and 4(b) are cross sectional and ghosted perspective views respectively of a first embodiment of bearing arrangement according to a first form of the present invention and derived from the arrangement of Figures 1(a) and 1(b).
Figures 5(a) and 5(b) are cross sectional and ghosted perspective views respectively of a second embodiment of a bearing arrangement in accordance with the present invention and derived from the arrangement of Figure 2,
Figures 6(a) and 6(b) are cross sectional and ghosted perspective views respectively of a third embodiment of bearing arrangement in accordance with the present invention, derived from the arrangement of Figure 3, and
Figures 7(a) and 7(b) are ghosted perspective and fragmentary views respectively of a fourth embodiment of the invention according to a second form.

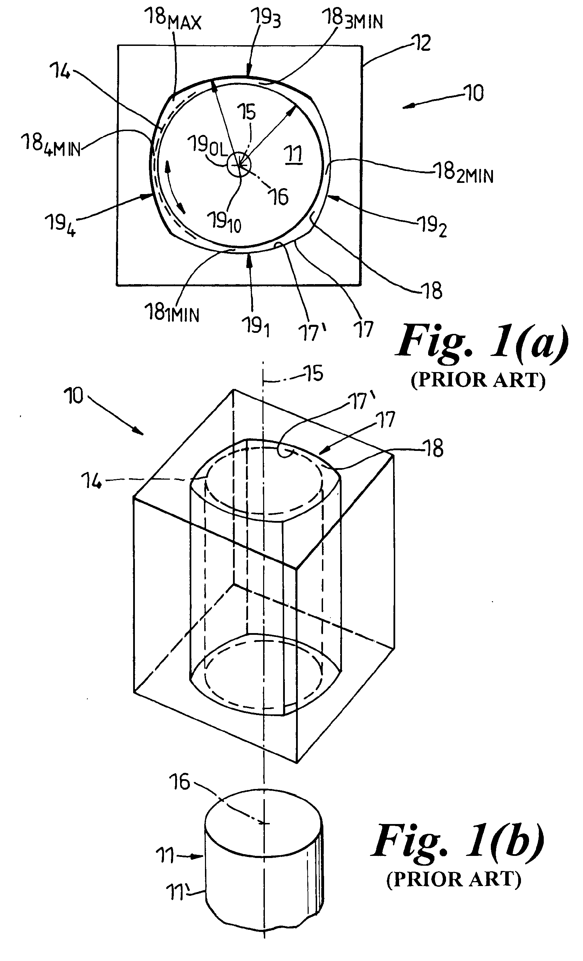

Referring to Figures 1(a) and 1(b) a journal bearing arrangement 10 for a vertically disposed shaft 11 comprises a housing 12 which surrounds a longitudinally extending, vertically orientated shaft space 14 (denoted by broken line) of circular cross section and centred on longitudinal axis 15. Although the bearing arrangement requires the presence of such a shaft space, it may be defined as such without the shaft being present. For convenience the shaft is described here as being present within the housing. The shaft 11 has a longitudinal axis 16 about which it is caused to rotate in use, the shaft axis having at least notional coincidence with the housing axis 15, and at its periphery a journal surface 11'.

Surrounding the shaft space the housing defines, or more practicably is lined with, a stationary bearing bush 17 the surface 17' of which (facing the shaft space) is of a suitable material for a lubricated sliding bearing, such as a relatively soft metallic alloy or a lubricatable polymer composition.

The shaft space 14, that is, the space which the shaft may occupy in operation is defined essentially by the stationary bush surface and somewhat smaller than its minimum dimension in order to permit a clearance 18 for lubricant to form a film.

Although the stationary bush surface surrounds the shaft space it does not do so with constant clearance, and in a manner analogous to that of the three-lobed bearings shown in the above mentioned prior art, it is formed of four sections 19₁, 19₂, 19₃ and 19₄ of equal angular extent, the surface of each section being an arc of a circular centred at an origin 19₁₀ etc. lying on a circular locus 19_{OL} displaced a small distance from the longitudinal axis 15 such that the bearing surface in each section has a greater radius of curvature than the shaft journal when in situ, defining a clearance which is minimum at the section centre (18_{1MIN}, 18_{2MIN}, ...)and increases each side thereof with angle about the longitudinal axis. The adjacent sections intersect and define lobe-like regions of maximum clearance 18_{MAX} at the boundaries of the sections. The regions of maximum clearance are also sometimes referred to as gutters.

In operation the interior of the housing is filled with liquid lubricant and in which the shaft is immersed, the longitudinal axes 15 and 16 coincident, that is, the housing comprises a bath for holding the liquid lubricant. When the shaft is rotated it exerts viscous drag on the lubricant which is forced in the rotational direction towards each region of minimum clearance, the lubricant liquid defining upstream thereof a hydrodynamic wedge of increasing pressure that locally offers significant load capacity and stiffness, and in providing different levels of support at different angular positions, serves to dampen eccentric rotational motion of the shaft.

The shape of the stationary surface 17' in each section is such that the minimum clearance is defined at the centre of the section and thus operation is the same irrespective of the direction of shaft rotation.

Each of the clearance variations extends longitudinally parallel to the longitudinal axis 15 such that the pressure formed at each region of minimum clearance is substantially constant in the direction perpendicular to the direction of shaft rotation, that is longitudinally, except possibly at the end regions if these are not closed.

As mentioned above, it has been found in practice that notwithstanding the fact that the shaft and stationary journal surface are immersed in the lubricant which is free to circulate, this does not occur with any degree of efficiency and the liquid lubricant of the load supporting hydrodynamic wedge is over-stressed.

Not only is liquid effectively confined to circulating motion about the axis at each longitudinal position rather than throughout the bath, but of shearing of the liquid as the path it would take is impeded by the constriction, and the imposition of loading, subjects the lubricant at the regions of highest loading to a temperature rise that may reduce its viscosity to a level where viscous drag upon which circulation and pressure depends declines and its load supporting capability is compromised.

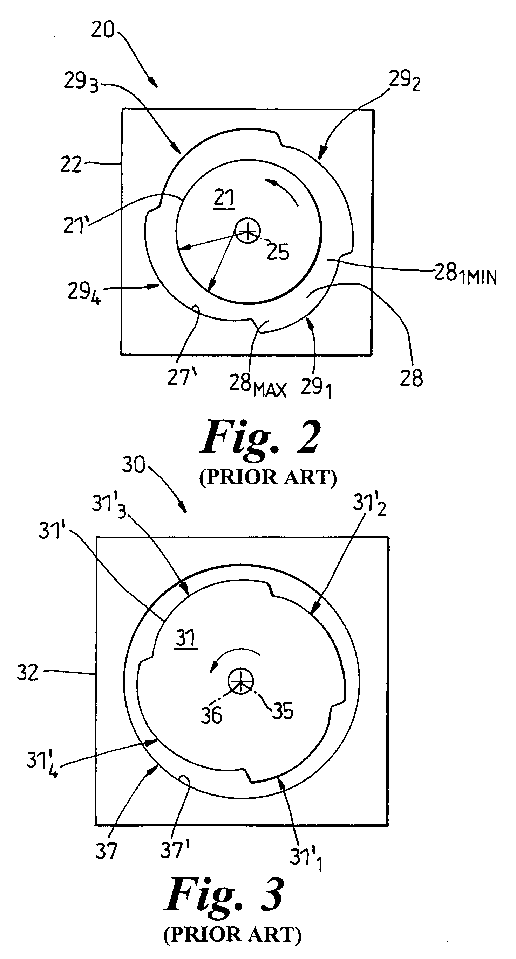

Referring to Figure 2 this shows a cross sectional view through another form of known immersion-lubricated, profiled clearance hydrodynamic sliding bearing arrangement 20, comprising a lobed stationary surface configuration in the manner of the above mentioned FR-A-2651845 for unidirectional shaft rotation. In this embodiment the arrangement 20 has a housing 22 with an inwardly facing stationary bearing surface defined as a bush 27 having four sections 29₁, 29₂, 29₃ and 29₄ arrayed around longitudinal axis 25, in each of which the bearing surface 27' is centred offset from the longitudinal axis such that with respect to the circular sectioned journal surface 21' of shaft 21 it defines a clearance 28 which reduces from one end to the other in the direction of rotation. Thus at the boundaries between sections there is a sudden change in radial clearance. Operation is as described above in that rotation of the shaft drags the liquid lubricant in the direction of rotation to form of a hydrodynamic wedge wherein there is a pressure gradient that provides local additional support but also creating the conditions to keep out additional, replenishment liquid and over-stressing with heat and pressure the liquid of the wedge.

A third form that is known from the art is shown in Figure 3 is a corresponding cross sectional view of a bearing arrangement 30 comprising for shaft 31 a housing 32 defining a shaft space an inwardly facing stationary surface 37' of uniformly circular cross section centred on longitudinal axis 35. The shaft 31 is disposed for rotation about axis 36 coincident with the housing axis 35 and has a journal surface 31' that is lobed in cross section, defining for adjacent sections 31'₁, 31'₂, 31'₃ and 31'₄. The bearing arrangement 30 with the shaft journal profile as shown is analogous to the arrangement 10, suited to unidirectional operation, being generally similar to the three-lobed arrangement shown in FR-A-2616861, but it may have a shaft cross section analogous to the lobed profile of arrangement 20 for bi-directional operation.

As stated the above configurations represent what is known in the art.

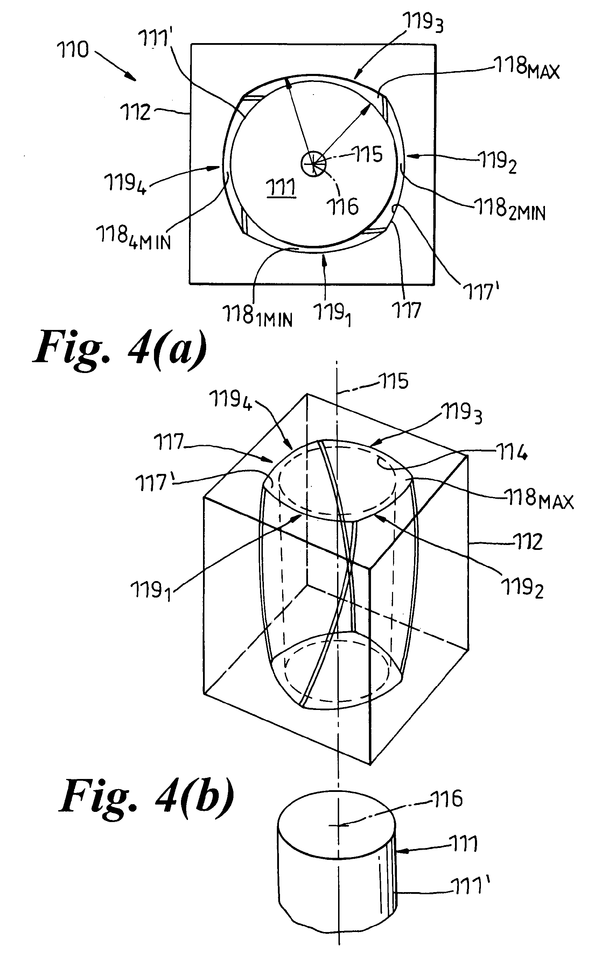

Referring now to Figures 4(a) and 4(b), these are respectively cross sectional and ghosted perspective views of a first embodiment of bearing arrangement 110 in accordance with the present invention. This arrangement is based upon the configuration of arrangement 10 and like parts are given like reference numbers, incremented by "100". The arrangement 110 comprises housing 112 surrounding a longitudinal axis 115 and shaft space 114 for receiving shaft 111 having a journal surface 111' of circular cross section defined about longitudinal and rotational axis 116. The housing supports therein a cylindrical bearing bush 117 surrounding the shaft space, and in operation the shaft, with a clearance 118 filled with liquid lubricant for which the housing comprises a bath such that the bearing components are immersed therein.

The lining has a surface, generally at 117', facing towards the shaft space and of non-circular profile in cross-section, comprising, in four angularly adjacent sections 119₁, 119₂, 119₃ and 119₄ around the longitudinal axis, four lobes of varying radial clearance with respect to the shaft and shaft space; the lobes are angularly symmetrical in defining alternating regions of increasing and decreasing clearance, the centre of each region being of minimum radial clearance 118_{1MIN}, ... with respect to the shaft journal to function irrespective of shaft rotation direction and the boundaries between sections being of maximum radial clearance 118_{MAX}, forming gutters as referred to above.

The arrangement 110 differs from the arrangement 10 in that the angular positions of the regions of maximum clearance, the lobes, and the regions of minimum clearance vary between opposite ends of the bearing. The bush 117 is twisted or skewed about the longitudinal housing axis 115 along at least part of its length, conveniently but not necessarily along its whole length from end to end, such that the angular positions are displaced angularly as a function of longitudinal position.

In operation, at any particular longitudinal position along the bearing, liquid is drawn by viscous drag of the shaft to form a hydrodynamic wedge of increasing pressure in the rotation direction towards the regions of minimum clearance, as discussed above. However, insofar as each region of minimum clearance and of maximum clearance not only extends across the direction of rotation but has a component inclined thereto along the shaft, the pressure developed at each region effects a degree of displacement of the liquid along the bearing returning it to the housing bath from the end. Thus the lobed shape of the stationary bearing defining each of the gutter, or each region of maximum clearance 118_{MAX}, as a duct of limited angular extent about the longitudinal axis at an angular position that varies between opposite ends of the bearing arrangement. Thus, in operation, the liquid drawn into the angular motion by the shaft journal is replenished with liquid from a different part of the bath, thereby creating circulation within the bath that permits the lubricant to stabilise at a lower temperature than when confined to circulation within the clearance only, maximising its viscosity and load bearing efficacy when drawn into the clearance. The bearing thus exerts a self-pumping of the lubricant liquid. It will be appreciated that in effecting a degree of pumping longitudinally there is notionally some decrease of load bearing capacity of the lubricant film in each section, but by keeping the pumping effect small and just sufficient to effect such circulation, the benefits in load bearing obtained by replenishment of the lubricant within the clearance are capable of outweighing such notional decrease with an actual increase.

The rate of angular displacement of the regions of maximum and minimum clearance (gutters) as af unction of longitudinal position may be constant such that the displacement increases uniformly as a function of longitudinal position, although the angular displacement rate may vary longitudinally.

The rate of angular displacement of the gutter lobes is conveniently chosen with a view to both the manufacture of the bush and the effect of the skewing upon the hydrodynamic wedge-forming efficacy of lobes not orthogonal to the direction of shaft rotation. In practise it has been found that a twist of the order of 90 degrees between opposite ends of the bush provides an adequate degree of pumping to replenish lubricant without detriment to the load bearing capacity of the lubricant wedges formed.

Clearly the angular displacement as a function of longitudinal position may vary other than uniformly, that is, the rate of displacement varying linearly or non-linearly as a function of longitudinal position. Furthermore, the lobe positions may vary angularly for only part of the length of the bearing; it may be appropriate to confine such variation to the central region of the bearing and permit the pressure differences between the regions of minimum clearance and the bath at the ends of the journal to regulate the degree of pumping.

It will be appreciated that the above-described principle may be applied to other forms of lubricant-immersed profiled clearance bearings, such as the lobed bearing arrangements shown in Figures 2 and 3.

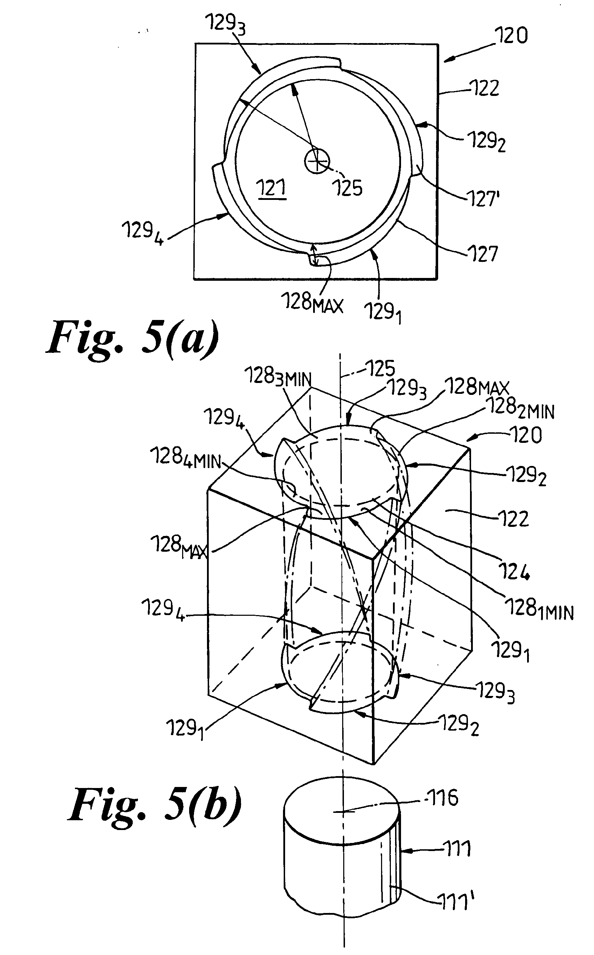

Referring now to Figures 5(a) and 5(b) these show cross sectional and ghosted perspective views respectively of a second embodiment of bearing arrangement according to the invention, 120, based upon the arrangement 20 outlined above. The common parts will not be described in detail. The housing 122 centred on longitudinal axis 125 supports a lining bush 127 that has a surface 127' of profile divided into four lobed sections 129₁, 129₂, 129₃ and 129₄ for supporting unidirectional rotation of shaft 111, the regions of minimum clearance 128_{1MIN}, 128_{2MIN}, 128_{3MIN} and 128_{4MIN} being adjacent regions of maximum clearance 128_{MAX}. It will be appreciated that the bush may be effectively skewed along all or part of its length such that the regions of maximum and minimum radial clearance with the shaft, extend both longitudinally and angularly of longitudinal axis 125 so that their angular positions vary between opposite ends of the bearing.

Such described variations in angular positions of the lobes is not confined to unitary bushes. As mentioned above, such a bush may be assembled within the housing from discrete segment; in analogous manner the stationary bearing may be provided by discrete pads upstanding from the housing and bounding the shaft space. Such pads may be fixed, resiliently deformable or tilting in known manner to effect formation of regions of increasing lubricant pressure transversely to the direction of shaft rotation and in accordance with the present invention the pads may be dimensioned and/or mounted to define such a longitudinally skewed region of maximum lubricant film pressure so as to effect a minor degree of longitudinal pumping of the lubricant in addition to its angular motion effected by viscous drag of the shaft journal.

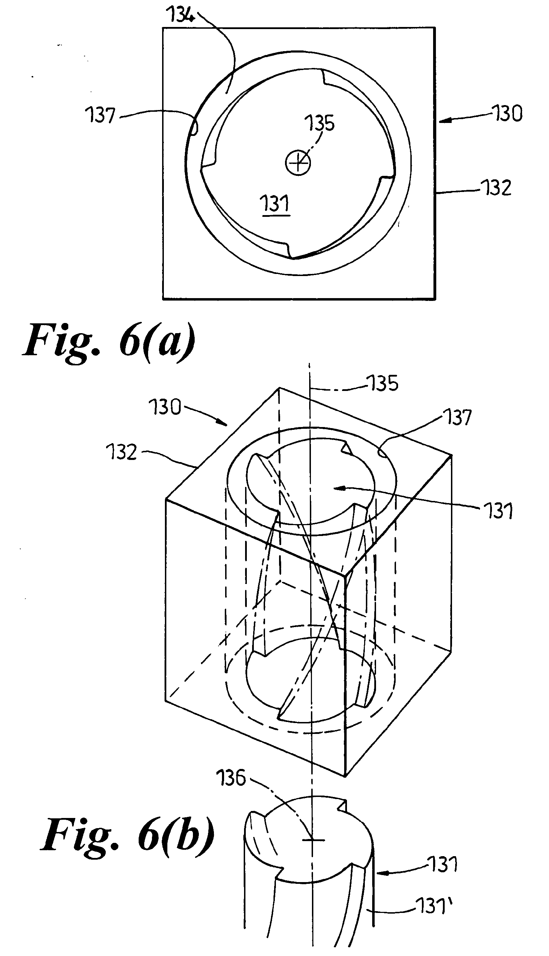

It will also be appreciated that the invention is not confined to stationary bearing components, but may also be employed with shaft-mounted bearings of the type shown in Figure 3. Referring to Figures 6(a) and 6(b) these are cross sectional and ghosted perspective views of a third embodiment of bearing arrangement 130, based upon the arrangement 30 described above. Housing 132 has longitudinal axis 135 and defines a shaft space 134 which is bounded by a lining, 137, possibly as a separate bush, of circular cross section. The shaft 131 has a longitudinal axis 136 extending along at least part of its length a journal surface 131' that has a lobed cross section that complements the bush surface of arrangement 120. The shaft 131 differs from the shaft journal 31 described above in that the angularly arrayed lobes vary in angular position between the ends of the bearing. The variation may be from end to end or over part of the length only; it may be uniform and at a constant rate or at a varying rate, in the manner of the embodiments described above.

The bearing arrangement 130 has a lobed shaft that is asymmetrical, for unidirectional rotation but it will be appreciated that the lobed surface may be symmetrical for bi-directional rotation, whilst still incorporating the variations in angular positions of the lobes longitudinally.

In the invention described above, representing a first form of the invention, the ducts are formed by the lobe regions of maximum clearance, the guttering and it is each of these regions or gutters which undergoes twisting displacement around the longitudinal axis as a function of longitudinal position, providing with the shaft journal a duct where the lubricant is under relatively low pressure and it can readily be displaced or pumped longitudinally.

Whilst for illustration purposes the lobes that form the guttering are shown exaggerated, in practice the radial differences between the regions of minimum and maximum clearance is small, of the order of millimetres. The invention also can be implemented in a second way in which instead of the lobe guttering undergoing displacement twist longitudinally there is provided in the stationary bearing surface a shallow groove or trough, which extends longitudinally and with an angular twist, the groove being confined to the relatively low pressure regions away from those of minimum clearance wherein a hydrodynamic wedge is required to form.

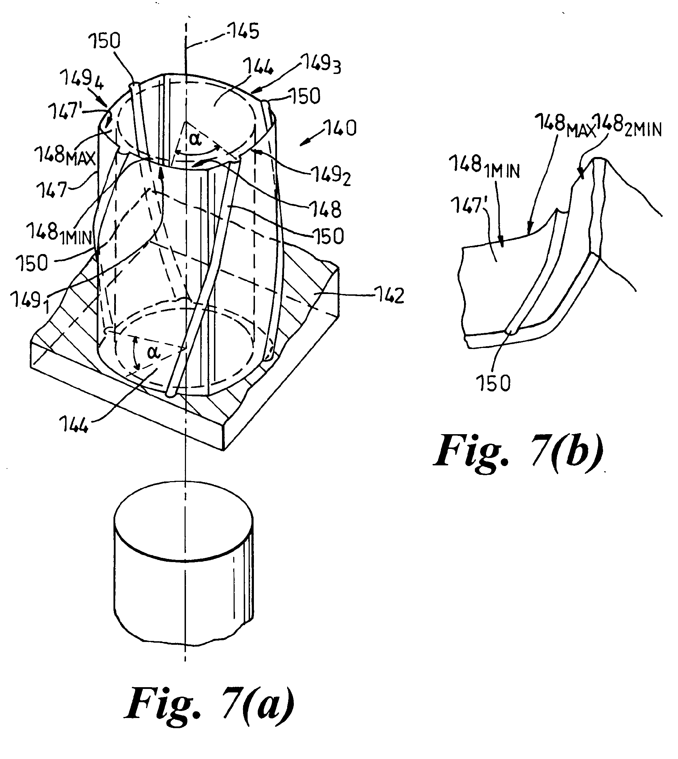

Figure 7(a) shows schematically a fourth embodiment of bearing arrangement 140 comprising housing 142 which defines a shaft space 144 centred on longitudinal axis 145 and surrounded by stationary bearing bush 147 having an inwardly facing bearing surface 147' that is spaced from the shaft space and shaft journal therein by clearance 148. Figure 7 (b) shows a fragment of the stationary bearing 147 and surface 147' from a different viewpoint.

The bearing bush 147 is divided notionally into four sections 149₁, 149₂, 149₃ and 149₄ around the axis, each section having substantially central regions of minimum clearance 148_{1MIN} etc and each section defined by intersecting regions of maximum clearance 148_{MAX} that may also be seen as longitudinally extending gutters. In the vicinity of at least some of the gutters, more particularly spaced from the regions of minimum clearance where hydrodynamic wedges of lubricant are required to form, the bearing surface 147' is formed with specific groove(s) or troughs 150 which extend longitudinally but also about the axis 145 through an angle α that takes the groove from one section to an adjacent one by way of the gutter region of maximum clearance. Any groove may be uniform depth, with respect to the local surface, along its length or may be of substantially uniform depth with respect to the housing and its longitudinal axis such that it varies in depth with respect to the surface as a function of the clearance of the stationary surface from the shaft journal, being shallower in the gutter region and "deeper" towards the regions of minimum clearance.

It will be appreciated that the generally cylindrical lobed bushes described above may be fabricated from discrete arcuate sections assembled within the housing or as a circumferentially complete, unitary bush. Such a unitary bush, if formed of a polymer, may be moulded to the desired configuration of lobed surface profile and twist along all or part of its length, obviating the need for complex manufacturing machining for each piece made after the mould. The same may be the case for discrete pads. Likewise, the journal surface of the shaft may be provided as a collar disposed to surround the shaft, either as a unitary body, heat shrunk or moulded thereon, or assembled from discrete segments. The manufacturing benefits of complex shapes required by the invention as outlined above applies equally to the provision of a lobed shaft journal collar.

As indicated above, the invention is not dependant upon the number of lobes in a lobed bearing arrangement, four being shown here for exemplary purposes only.

It will also be appreciated that the invention is not confined to radial bearing arrangements in which the shaft is orientated to rotate about a vertical axis, and may be utilised with any axis orientation.

## Claims

1. An immersion-lubricated, profiled clearance, sliding radial bearing arrangement (110; 120; 130; 140) for a shaft (111; 121; 131) rotatable about a longitudinal axis (116; 126) and having around its periphery a journal surface (111'), the arrangement comprising a housing (112; 122; 132; 142) having a longitudinally extending bore centred on a longitudinal axis( 115; 125; 135; 145), a shaft space (114; 124; 134; 144) extending along the bore and centred on the longitudinal axis, arranged in operation to contain a said shaft (111; 121; 131), and a stationary bearing surface (117'; 127'; 137'; 147') extending longitudinally of the housing and at least in part surrounding the shaft space, said stationary surface and journal surface being arranged to define in operation a clearance (118; 128; 134; 148) therebetween for liquid lubricant, one of the stationary bearing surface or journal surface having a cross sectional profile that is substantially circular and the other of said surfaces (119₁, 119₂ ..; 129₁, 129₂, ..; 149₁ ..) having a cross sectional profile that is non-circular, being defined in sections arrayed about its longitudinal axis and defined by arcs of circles centred on an axis displaced from the longitudinal axis so as to vary the clearance with respect to the other surface in an angular direction as a succession of regions of maximum and minimum clearance (118_{MAX}, 118_{1MIN}, 118_{2MIN} ..; 128_{MAX}, 128_{1MIN}, 128_{2MIN} ..; 148_{MAX}, 148_{1MIN}, 148_{2MIN} ..) , **characterised in that** there is defined between the journal and bearing surface in at least one region of clearance greater than the minimum a duct (118_{MAX}; 150) extending lengthways of the bearing arrangement, each said duct being of limited angular extent about the longitudinal axis and at an angular position that varies between opposite ends of the bearing arrangement.

2. A sliding radial bearing arrangement (110; 120) as claimed in claim 1 in which there are a plurality of ducts each comprising the region of maximum clearance (118_{MAX}; 128_{MAX}) between the adjacent sections, the angular positions of the succession of regions of maximum and minimum clearance varying between said opposite ends of the bearing arrangement.

3. A sliding radial bearing arrangement (140) as claimed in claim 1 including at least one duct comprising a channel (150) formed in the surface of the stationary bearing, the duct extending lengthways and having along its length an angular position that varies taking it from one section (149₁) to an adjacent one (149₂) by way of the region (148_{MAX}) of maximum clearance between the sections.

4. A sliding radial bearing arrangement as claimed in claim 3 in which the channel (150) in the stationary bearing surface is of fixed depth relative to the longitudinal axis.

5. A sliding radial bearing arrangement as claimed in any one of claims 1 to 4 in which the angular position of each duct varies as a function of longitudinal position between opposite ends of the arrangement.

6. A sliding radial bearing arrangement as claimed in any one of claims 1 to 5 in which the variation in angular position of each duct is confined to one or more discrete parts of the bearing arrangement constituting less than its whole length.

7. A sliding radial bearing arrangement as claimed in any one of the preceding claims in which the angularly arrayed sections (119₁, 119₂ ..; 129₁, 129₂ ..) define a lobed surface (117'; 127')for disposition and operation facing a surface of circular cross sectional profile.

8. A sliding radial bearing arrangement as claimed in any one of claims 1 to 7 in which the angularly arrayed sections are integral with the housing or shaft.

9. A sliding radial bearing arrangement as claimed in any one of claims 1 to 7 in which the angularly arrayed sections are discrete from the housing or shaft and mounted therewith to define the stationary bearing lining or shaft journal surface.

10. A sliding radial bearing arrangement as claimed in claim 9 in which the sections are formed as a unitary tubular body (117; 127; 131; 142).

11. A sliding radial bearing arrangement as claimed in claim 9 in which the angularly arrayed sections are formed by an array of separated bearing pads mounted with respect to the housing.

12. A sliding radial bearing arrangement as claimed in any one of the preceding claims in which said other of said stationary bearing surface or journal surface defining said angularly arrayed sections is moulded of a polymer material incorporating therein the longitudinal variation in angular position of the surface variations defining the regions of maximum and minimum clearance.
